# FASCICULE DE BREVET EUROPEEN

(11) **EP 1 442 567 B1**
(45) Date de publication et mention de la délivrance du brevet: **11.06.2008**
(21) Numéro de dépôt: 02801363.9
(22) Date de dépôt: 11.10.2002
(51) Int. Cl.: H04L 12/56, H04L 12/28

(54) **SYSTEME DE COMMUNICATION POLYVALENT SANS FIL**
DRAHTLOSES MEHRZWECKKOMMUNIKATIONSSYSTEM
WIRELESS MULTIPURPOSE COMMUNICATION SYSTEM

(30) Priorité: 16.10.2001 FR 0113322
(43) Date de publication de la demande: 04.08.2004
(73) Titulaire: Agbegnenou, Victor, Kossikouma, 92600 Asnières sur Seine (FR)
(72) Inventeur: Agbegnenou, Victor, Kossikouma, 92600 Asnières sur Seine (FR)
(74) Mandataire: Dupuis-Latour, Dominique
(86) Numéro de dépôt international: PCT/FR2002/003458
(87) Numéro de publication internationale: WO 2003/034668

(56) Documents cités:
- WO-A-99/35788
- DE-A- 19 948 717
- AKERBERG D ET AL: "DECT technology for radio in the local loop" VEHICULAR TECHNOLOGY CONFERENCE, 1994 IEEE 44TH STOCKHOLM, SWEDEN 8-10 JUNE 1994, NEW YORK, NY, USA,IEEE, 8 juin 1994 (1994-06-08), pages 1069-1073, XP010123239 ISBN: 0-7803-1927-3

## Description

L'invention concerne un système de communication polyvalent mettant en oeuvre des technologies sans fil.

On connaît la souplesse d'utilisation des technologies sans fil, plus précisément les technologies sans fil à courte distance de type *wireless* ou *cordless* permettant par exemple de gérer des liaisons sans fil entre des combinés téléphoniques et des bases reliées au réseau téléphonique filaire.

Mais ces technologies ne sont mises en oeuvre qu'au niveau de l'installation de l'abonné, à partir de prises placées dans l'appartement ou la maison de celui-ci et reliées à des boîtiers collectifs de groupage de lignes, eux-mêmes raccordés à un autocommutateur central du réseau.

Le câblage terminal des immeubles ou des zones résidentielles est toujours lourd à mettre en oeuvre, avec des impératifs de coûts, de délais d'installation et de manque de flexibilité, puisque l'installation d'une ligne d'abonné jusqu'à la résidence de celui-ci ne se justifie, en pratique, que pour des utilisations durables, impliquant un abonnement d'assez longue durée et des frais de raccordement au réseau pour couvrir les coûts divers de mise en place de la ligne jusqu'à la résidence de l'abonné.

Ces contraintes pratiques, avec leur coût corrélatif, ont freiné le développement du téléphone dans certains pays, notamment les pays en voie de développement où les ressources des utilisateurs potentiels sont limitées et où la structure complexe de l'habitat rend très difficile la pose des lignes. Toutes ces contraintes créent des obstacles à la diffusion du téléphone individuel au profit du plus grand nombre.

De plus, les réseaux de télécommunication filaires, du fait de leur manque de flexibilité, ne sont pas adaptés à des situations où un abonné souhaiterait disposer d'une ligne pour une durée limitée (par exemple pour quelques heures ou quelques jours seulement), ou dans le cas où cet utilisateur se déplacerait entre plusieurs lieux différents. L'utilisation d'un radiotéléphone de type GSM par exemple constitue certes une solution appropriée à ces situations, mais il s'agit d'un moyen relativement coûteux et qui, de plus, suppose que l'utilisateur se trouve dans une zone qui soit couverte par le réseau de radiotéléphonie, ce qui est loin d'être le cas dans de nombreuses régions isolées, ou dans des pays très vastes où seules les zones urbaines sont couvertes par le réseau.

L'un des buts de l'invention est de pallier ces diverses limitations des réseaux filaires, en proposant un système de communication permettant un raccordement simple et rapide (donc peu coûteux), et au surplus très flexible, d'un abonné au réseau téléphonique.

Comme on le verra également, le système de l'invention permet, outre la liaison téléphonique, de mettre en oeuvre de nombreuses autres applications telles que : interphonie locale, serveur de voix et de données (par exemple transmission de la musique diffusée par un baladeur), serveur d'images dans des applications professionnelles telle que l'imagerie médicale, serveur de jeux multimédia, etc.

On connaît des systèmes permettant d'interfacer des utilisateurs à un réseau téléphonique par le biais de liaisons sans fil "wireless" avec un autocommutateur central. Un tel système est notamment décrit dans le WO-A-99/35788- Il évite de recourir à un câblage fixe, coûteux et figé, de l'infrastructure téléphonique d'un bâtiment.

L'invention propose un perfectionnement aux systèmes du type général décrit par le WO-A-99/35788 précité, correspondant au préambule de la revendication 1. Les éléments spécifiques de l'invention sont énoncés dans la partie caractérisante de la revendication 1, et les sous-revendications visent des formes de remise en oeuvre particulières, avantageuses.

On va maintenant décrire un exemple de mise en oeuvre de l'invention, en référence aux dessins annexés.
La figure 1 est une vue schématique montrant les divers éléments constituant le système de l'invention.
La figure 2 est un schéma par blocs de la borne multiprise du système de l'invention.
La figure 3 est un schéma par blocs du module individuel de liaison du système de l'invention.
La figure 4 est un schéma par blocs de l'ensemble déporté du système de communication de l'invention.
La figure 5 illustre une variante perfectionnée du module individuel de liaison de la figure 3, configuré de manière à pouvoir fonctionner en serveur local.

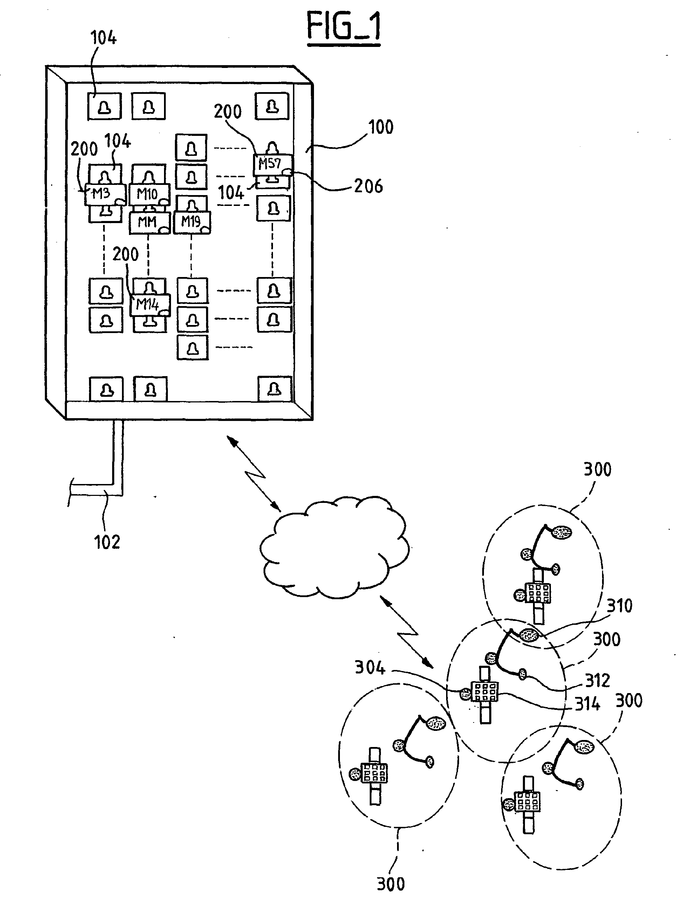

Comme illustré figure 1, le système de l'invention comporte une borne multiprise 100 (ci-après "borne") avec un boîtier relié à un faisceau de lignes de télécommunication 102 (ci-après "lignes"), qui peuvent être des lignes classiques du réseau téléphonique commuté (RTC), ou bien encore un faisceau satellite de type VSAT, ou des lignes en fibres optiques, ou encore des lignes d'un réseau non filaire (réseau de radiotéléphonie).

La borne porte une série de prises individuelles 104 (ci-après "prises") susceptibles de recevoir chacune, par simple enfichage, un module individuel de liaison 200 (ci-après "module"). Chaque module 200 est personnalisé et affecté à un utilisateur, par exemple à un appartement ou une maison donnée dans un immeuble ou une zone résidentielle.

Il peut être prévu autant de prises 104 que de lignes 102 ; en tenant compte du fait que toutes ces prises ne sont pas nécessairement utilisées en même temps, il est également possible de prévoir un nombre de prises 104 supérieur à celui des lignes 102, en mettant en oeuvre une technologie, en elle-même connue, de multiplexage permettant la multiplication des prises.

Chacun des modules 200 communique par des moyens émetteurs-récepteurs sans fil avec un ou plusieurs ensembles ou "kits" déportés 300 à la disposition des divers utilisateurs. Chaque kit 300 comporte les différents organes nécessaires à une communication téléphonique, à savoir, au minimum, un écouteur 310, un microphone 312 et un clavier 314 qui sont en liaison bidirectionnelle sans fil (antenne 304) avec un module 200 (antenne 206) auquel le kit est associé.

Le combiné écouteur-microphone peut être, comme illustré, un système dépourvu de fil de liaison au clavier et au boîtier central du kit, mais le kit peut également se présenter sous la forme extérieure d'un poste téléphonique classique, sans fil ou avec un combiné relié par un cordon à un boîtier doté d'un clavier.

Avec cette configuration générale, on évite le câblage des lignes téléphoniques dans les appartements ou les maisons ; la borne 200 peut être une borne communautaire, résidentielle, privée ou publique selon le lieu et l'usage auquel elle est destinée.

Les prises et les modules peuvent être installés sur un panneau dont l'accès sera réservé à un opérateur du service de télécommunication.

En variante, les prises peuvent être rendues directement accessibles aux usagers, qui viendront eux-mêmes monter leur module, de façon temporaire, pour le temps d'une communication ou pour quelques heures par exemple. Dans cette configuration, le module de l'utilisateur peut être branché par ce dernier sur n'importe quelle prise de n'importe quelle borne, de sorte que l'utilisateur pourra appeler à partir de son kit de n'importe quel endroit, en utilisant le même matériel chez lui, à son travail ou sur une borne publique installée dans la rue.

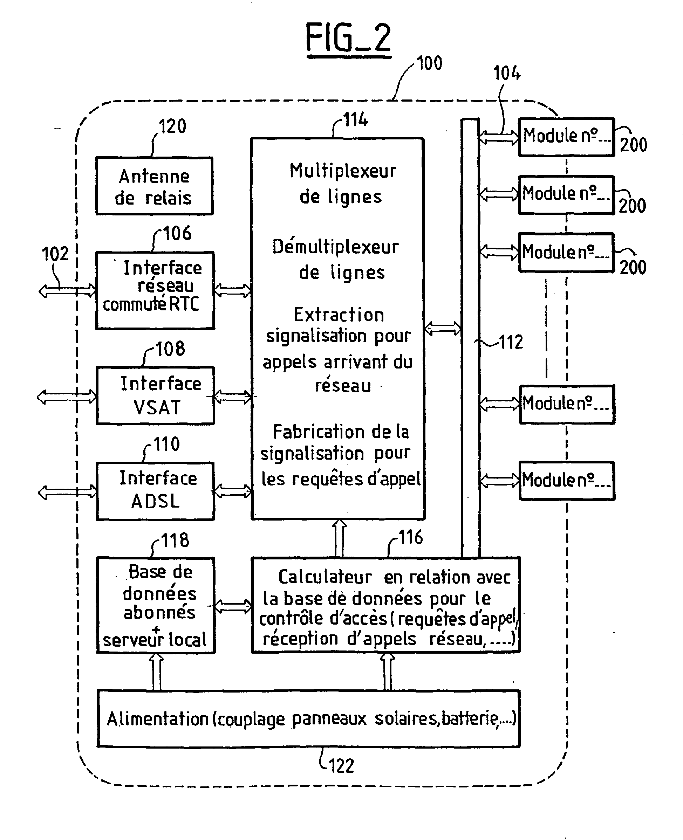

On va maintenant décrire plus en détails les différents éléments de ce système de communication, en référence aux figures 2 à 5.

La figure 2 est un schéma par blocs montrant les différents organes fonctionnels constituant une borne 100.

Pour la liaison aux lignes 102, il est prévu des interfaces 106, 108, 110, ..., spécifiques au type de connexion (RTC, VSAT, ADSL, etc.) et intégrant les divers protocoles de communication nécessaires à l'échange d'informations.

D'autre part, la liaison avec les divers modules 200 enfichés sur les prises 104 est assuré par un bus 112.

Les interfaces 106, 108, 110 et le bus 112 sont reliés à une unité centrale de gestion 114 assurant les diverses fonctions nécessaires telles que :
- multiplexage/démultiplexage des lignes,
- extraction de la signalisation pour les appels incidents arrivant sur les diverses lignes,
- élaboration de la signalisation pour les requêtes d'appel en provenance des divers kits via les modules 200.

Cette unité de gestion est pilotée par un calculateur 116 susceptible de coopérer avec une base de données locale 118 conservant en mémoire les informations relatives aux divers abonnés pour lesquels un module 200 a été enfiché dans une prise de la borne, ceci afin de gérer notamment le contrôle d'accès aux lignes, ainsi que diverses fonctions telles que la signalisation spécifique à l'abonné, la gestion de la facturation des communications, etc.

La borne 100 peut éventuellement disposer d'une mémoire permettant de la faire fonctionner en serveur internet local, les différents modules permettant la diffusion du contenu du serveur sur des terminaux associés à un ensemble déporté.

La borne peut disposer d'une antenne relais 120 permettant d'augmenter la portée de la transmission entre modules et kits, en transmettant vers un kit distant les données de l'antenne d'un module installé sur la borne, et *vice versa.*

Enfin, la borne dispose d'un système d'alimentation propre (panneaux solaires, batterie, etc.), qui est avantageusement utilisé pour alimenter aussi les divers modules 200, en plus de leur source d'alimentation individuelle propre ; l'enfichage du module sur une prise assure alors également le couplage avec l'alimentation électrique.

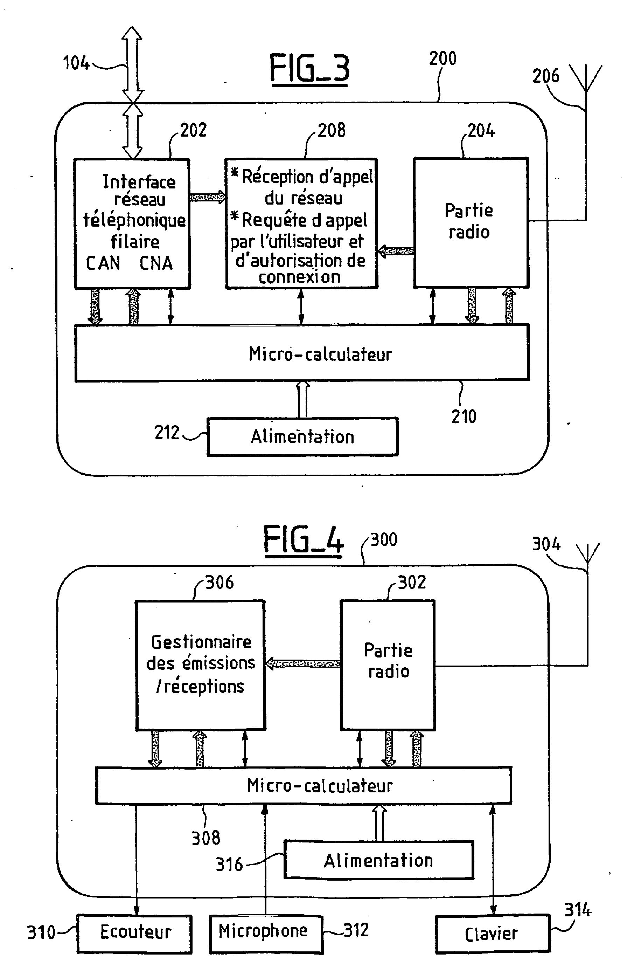

L'architecture générale d'un module individuel de liaison est illustrée de façon schématique sur la figure 3.

Chaque module 200, monté sur une prise 104 de la borne, comporte une interface 202 avec la borne, des moyens émetteurs-récepteurs radio 204 coopérant avec une antenne 206, et une unité centrale de gestion 208 pilotée par un microcalculateur 210. Comme on l'a indiqué, l'alimentation 212 peut être avantageusement apportée par la borne.

L'ensemble déporté 300 est illustré schématiquement figure 4. Il comprend une partie radio émettrice-réceptrice 302 reliée à une antenne 304, avec une unité centrale de gestion 306 pilotée par un microcalculateur 308.

Divers transducteurs tels qu'écouteur 310, microphone 312 et clavier 314 sont reliés au microcalculateur 308 par des liaisons filaires, ou, avantageusement, par des liaisons sans fil mettant en oeuvre des technologies telle que Bluetooth, DECT ou autres. L'ensemble dispose également d'une alimentation 316, par exemple une batterie rechargeable.

L'ensemble déporté 300 peut être avantageusement un "kit mains libres", où l'écouteur 310, le microphone 312 et le clavier 314 sont des éléments physiquement indépendants avec chacun leurs moyens émetteurs-récepteurs propres de communication avec le module individuel de liaison 200. Avantageusement, l'écouteur est alors réalisé sous la forme d'une oreillette sur laquelle peuvent être enfichés en mode *plug-and-play* (c'est-à-dire à chaud, sans réinitialisation de l'ensemble) (i) un second écouteur, dépourvu de moyens radio (simple transducteur destiné à améliorer le confort d'écoute) et/ou (ii) le microphone 312, dans un logement situé sur un prolongement de l'oreillette s'étendant à proximité de la bouche de l'utilisateur. Pour le clavier, on peut intégrer celui-ci à un objet en forme de stylo, de montre, etc. De plus, on peut très avantageusement prévoir dans cet objet un logement où pourra être enfiché en mode *plug-and-play* le microphone 312. L'utilisateur aura ainsi le choix de placer le microphone soit sur l'oreillette, soit sur l'objet portant le clavier (par exemple un stylo glissé dans une poche de poitrine) ; on notera que dans ce cas le microphone n'a pas besoin d'être fonctionnellement autonome et peut être un simple transducteur utilisant les moyens émetteurs-récepteurs de l'écouteur 310 ou du clavier 314, selon le cas.

De façon générale, le kit intègre un numéro d'identification d'utilisateur, qui peut être incorporé dans une mémoire du microcalculateur, ou bien inscrit dans une carte à microcircuit séparable du même type que les cartes SIM des radiotéléphones GSM, ou bien encore sous forme d'un code tapé par l'utilisateur lors de la connexion.

Dans une première forme de réalisation, un canal physique (fréquence, code, ...) est affecté de façon statique à chaque module 200 et donc à chaque kit 300 qui lui est associé. Ceci permet de disposer de modules relativement simples, où l'unité centrale de gestion 208 assure essentiellement la détection des appels entrants ou sortants et le transfert des informations entre l'interface 202 et la partie radio 204.

Toutefois, cette solution présente l'inconvénient de nécessiter autant de modules que de lignes téléphoniques souscrites, alors que le probabilité d'appel de tous les utilisateurs en même temps est quasi-nulle.

Aussi, dans une seconde forme de mise en oeuvre, il est possible d'optimiser la borne en réduisant le nombre de modules par rapport au nombre potentiel d'utilisateurs. L'attribution des canaux est alors dynamique et variable, les modules n'étant pas affectés de façon figée à un utilisateur donné.

À cet effet, l'unité centrale de gestion 208 doit assurer un certain nombre de fonctions supplémentaires, la séquence étant la suivante, lors d'une demande de connexion d'un utilisateur :
- le kit appelant envoie, sur un canal radio réservé, une demande générale de connexion, dans laquelle se trouve le numéro d'identification de l'usager ;
- cette demande est reçue par tous les modules qui sont inactifs sur la borne (c'est-à-dire qui ne sont pas en cours de communication) ;
- le(s) module(s) qui reçoi(ven)t la demande transme(tten)t cette dernière à l'unité centrale de gestion 114 de la borne ;
- la borne vérifie, d'après la base de données , que le numéro d'identification est conforme à une liste d'usagers autorisés et renvoie vers l'un des modules l'autorisation de connecter l'usager au réseau téléphonique ; cette autorisation est assortie d'un paramètre donnant le numéro de canal radio à utiliser ;
- le module ainsi sélectionné envoie au kit concerné, sur le canal réservé, l'information d'autorisation accompagnée du numéro de canal (ou un signal de refus d'établissement de la connexion).

La fonction de contrôle du numéro d'identification de l'usager peut être étendue à un ensemble de bornes du même type, sur lesquelles on distribue l'ensemble des usagers acceptés à accéder aux bornes pour pratiquer un appel ; ainsi un usager peut utiliser indifféremment une borne parmi plusieurs, selon sa position géographique instantanée, ce qui permet d'étendre la zone de couverture.

Les modules peuvent éventuellement gérer des fonctions de transfert d'appel, l'utilisateur disposant alors de deux modules dont l'un ("module fixe") sera branché à une prise de son numéro de téléphone habituel ; sur la mémoire de ce module fixe l'utilisateur programme, directement ou à distance, les numéros sur lesquels il souhaite rediriger les appels. Il emporte avec lui le deuxième module ("module mobile"), de manière à pouvoir le brancher sur une autre prise quelconque, hors de chez lui. S'il reçoit un appel sur son numéro habituel où il est absent, le module fixe se charge de rechercher sur le réseau national ou international si le module mobile est branché à une autre prise. Si tel est le cas, l'appel est transféré sur la borne où est branché le module mobile pour que le kit sonne et que l'utilisateur reçoive l'appel là où il se trouve. Avantageusement, dans le cas où le module mobile n'est branché nulle part, le module fixe redirige l'appel vers un numéro de radiotéléphone. Ce principe de *roaming* (itinérance) est rendu possible par le fait que chaque module est doté d'un code d'identification, par exemple inscrit dans la mémoire d'une carte à microcircuit du même type que les cartes SIM des radiotéléphones GSM. C'est ce code qui sera recherché au cours du roaming, tant sur le réseau national que sur le réseau international.

Le module mobile, une fois branché au réseau, peut aussi se mettre automatiquement en liaison directe avec le module fixe sur programmation, pour simplifier et faciliter la procédure de roaming.

Outre les fonctions de téléphonie que l'on vient de décrire, les modules 200 peuvent être utilisés chacun de façon autonome à la manière d'un adaptateur polyvalent faisant fonction de serveur local de données audio, vidéo ou autre.

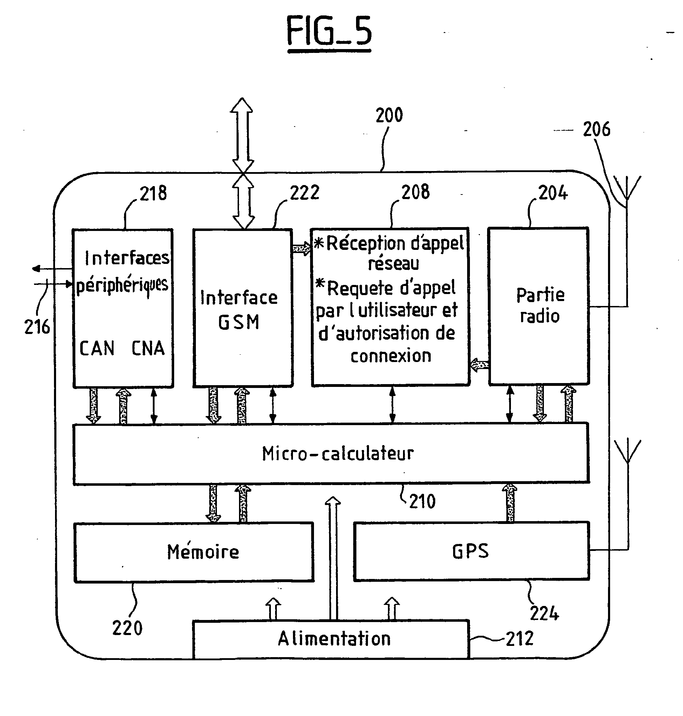

L'architecture du module 200 est alors celle illustrée figure 5.

Outre les éléments déjà décrits, te module inclut une ou plusieurs interfaces 218 permettant d'assurer, via des prises 216, la liaison à divers appareils tels que baladeur, camescope, sonde médicale (ophtalmoscope, otoscope, stéthoscope, sonde d'échographie ou Doppler, ECG), etc.

Ces différents appareils vont émettre des signaux numériques ou numérisés qui seront transmis par la partie radio 204 du module 200 à un kit distant 300, par exemple l'écouteur du kit pour une source audio, un écran vidéo du kit pour la reproduction d'images, etc. Dans l'exemple de la connexion d'un baladeur au module, ce dernier diffusera les signaux audio du baladeur vers le kit distant. On transforme ainsi un baladeur avec des écouteurs initialement filaires en un baladeur sans fil grâce au module et au kit déportés. Le kit peut avantageusement comporter des fonctions sans fil de contrôle de la source de signaux ou de données, permettant à l'utilisateur de piloter complètement la transmission et la diffusion de ces signaux depuis le kit.

Le module 200 peut également intégrer des organes tels que mémoire de masse 220, interface GSM 222, circuit de localisation GPS 224, etc. pour mettre en oeuvre diverses fonctions telles que localisation ou téléchargement de données.

S'il a connecté en même temps à son module un baladeur et un radiotéléphone GSM, l'utilisateur peut écouter la musique du baladeur connecté et recevoir un appel téléphonique de son GSM ; en cas d'arrivée ou de lancement d'un appel, le module donne par défaut la priorité à la communication téléphonique. Il agit donc en serveur de signaux audio et de données, la priorité étant donnée à la communication GSM par rapport aux autres fonctions. Cette priorité peut bien entendu être modifiée par une programmation appropriée du module. Cette extension est également valable pour toute autre source de signaux audio et/ou de données.

Cette architecture de module peut également assurer d'autres fonctions locales telles que des fonctions d'interphonie entre plusieurs utilisateurs porteur chacun d'un kit, branché un canal du module, ou encore comme enregistreur de signaux audio ou de données en provenance des kits (fonction "dictaphone") ou inversement, comme enregistreur de messages vocaux ou numériques laissés par des correspondants en l'absence de réponse par l'utilisateur (fonction " répondeur").

Enfin, on soulignera que les modules peuvent être avantageusement connectés non seulement aux prises des bornes telles que décrites plus haut, mais également à toute autre prise téléphonique, par exemple murale, via une connectique adaptatrice.

## Revendications

1. Un système de communication polyvalent sans fil pour connecter des utilisateurs à un réseau téléphonique, ce système comportant :
- une borne (100) reliée à une pluralité de lignes (102) de télécommunication du réseau et comportant :
· des moyens (106, 108, 110) d'interfaçage à ladite pluralité de lignes, et
· des moyens distributeurs (114, 116), aptes à permettre un couplage sélectif à ladite pluralité de lignes,
- au moins un module de liaison (200) comportant :
· des moyens (202) d'interfaçage avec les moyens distributeurs de la borne,
· des moyens (204, 206) émetteurs-récepteurs sans fil, et
· des moyens (208, 210) de commande desdits moyens d'interfaçage et desdits moyens émetteurs-récepteurs, aptes à convertir en signaux radio à émettre des signaux en provenance d'une ligne sélectionnée par les moyens distributeurs de la borne, et à convertir des signaux radio reçus en signaux délivrés aux moyens distributeurs de la borne à destination de cette même ligne,
- pour chaque module de liaison, au moins un ensemble déporté autonome (300) associé, comportant :
· des moyens (302, 304) émetteurs-récepteurs sans fil, aptes à établir une voie de communication bidirectionnelle avec un module individuel de liaison associé, et
· des moyens (306, 308) d'interfaçage avec des transducteurs (310, 312, 314) de recueil et/ou de restitution de signaux audio, vidéo et/ou de données numériques,
système **caractérisé en ce que** :
- la borne est une borne multiprise comportant une pluralité de prises individuelles (104),
- les modules sont des modules individuels aptes à être montés de manière dissociable sur l'une desdites prises, et chaque module individuel est attribué à au moins un utilisateur donné,
- le nombre de lignes est inférieur au nombre de prises, et la borne comporte des moyens multiplexeurs, aptes à sélectionner le module attribué à un utilisateur donné en cas d'appel incident sur une ligne à destination de cet utilisateur ou, inversement, sélectionner une ligne disponible en cas d'appel en provenance de cet utilisateur,
- l'ensemble déporté inclut un numéro d'identification d'utilisateur, ainsi que des moyens pour émettre une requête de connexion incluant ce numéro d'identification d'utilisateur, et
- la borne comprend des moyens pour vérifier la conformité dudit numéro d'identification d'utilisateur, et pour renvoyer à l'ensemble déporté, via ledit module individuel sélectionné par les moyens multiplexeurs de la borne, une autorisation de connecter l'usager au réseau téléphonique.

2. Le système de la revendication 1, dans lequel la borne comporte en outre des moyens émetteurs-récepteurs relais (120) coopérant avec les moyens émetteurs-récepteurs des modules de manière à recevoir les signaux radio émis par ces modules et les réémettre, après amplification, à destination des ensembles déportés.

3. Le système de la revendication 1, dans lequel les moyens d'interfaçage de la borne comportent des moyens d'interfaçage à un ou plusieurs réseaux téléphoniques de type RTC, VSAT, ADSL, station hertzienne, boucle locale filaire ou réseau de radiotéléphonie.

4. Le système de la revendication 1, dans lequel la borne comprend en outre des moyens (122) d'alimentation en énergie électrique, et les prises comportent des bornes d'alimentation en énergie électrique des modules individuels et/ou de recharge d'une source individuelle propre des modules individuels.

5. Le système de la revendication 1, dans lequel chaque ensemble déporté est affecté de façon statique et univoque à un module donné.

6. Le système de la revendication 1, dans lequel, les ensembles déportés étant en nombre supérieur à celui des modules, chaque ensemble déporté est affecté de façon dynamique et variable à un module donné.

7. Le système de la revendication 6, dans lequel les modules comportent des moyens pour :
- recevoir une demande de connexion émise par un ensemble déporté,
- envoyer vers les moyens de commande de la borne une requête d'autorisation d'accès et d'attribution de ligne,
- recevoir de la borne un signal d'autorisation d'accès et de connexion à une ligne du réseau, ainsi qu'un identifiant de canal radio, et
- établir une communication avec ledit ensemble déporté sur le canal ainsi identifié.

8. Le système de la revendication 1, dans lequel les modules comportent :
- des moyens (216, 218) de couplage à des sources de signaux audio, vidéo et/ou de données numériques, et
- des moyens (210, 220) formant serveur local, aptes à commander de manière autonome l'échange des signaux entre lesdites sources et les moyens émetteurs-récepteurs, à destination et/ou en provenance de l'ensemble déporté associé au module.

9. Le système de la revendication 1, dans lequel :
- l'ensemble déporté autonome (300) comporte un écouteur (310), un microphone (312) et un clavier (314) physiquement indépendants et pourvus de moyens émetteurs-récepteurs sans fil associés,
- l'écouteur est réalisé sous forme d'une oreillette sur laquelle peuvent être enfichés (i) un second écouteur dépourvu de moyens émetteurs-récepteurs et/ou (ii) ledit microphone (312),
- le clavier est intégré à un objet distinct, sur lequel peut être également enfiché ledit microphone (312).

10. Le système de la revendication 9, dans lequel le microphone (312) est un transducteur dépourvu de moyens émetteurs-récepteurs propres et coopérant avec les moyens émetteurs-récepteurs de l'élément, écouteur (310) ou clavier (314) selon le cas, sur lequel il est connecté.

## Claims

1. A versatile wireless communications system for connecting users to a telephone network, said system comprising :
- a terminal (100) connected to a plurality of telecommunications lines (102) of said network and comprising:
· means (106, 108, 110) for interfacing with said plurality of lines; and
· distributor means (114, 116) suitable for selectively coupling to said plurality of lines;
- at least one connection module (200) comprising:
· means (202) for interfacing with said distributor means of the terminal;
· wireless transceiver means (204, 206); and
· means (208, 210) for controlling said interface means and said transceiver means, being suitable for converting signals coming from a line selected by the distributor means of the terminal into radio signals for transmission, and for converting received radio signals into signals that are delivered to the distributor means of the terminal for application to the same line;
- for each individual connection module, at least one independent associated out-station (300) comprising:
· wireless transceiver means (302, 304) suitable for establishing a both-way communication channel with an associated individual connection module; and
· means (306, 308) for interfacing with transducers (310, 312, 314) for picking up and/or playing back audio, video, and/or digital data signals,
said system being **characterised in that**:
- said terminal is a multi-outlet terminal comprising a plurality of individual outlets (104);
- said modules are individual modules suitable for being mounted in a separable manner on one of said outlets, and each individual outlet is allocated to at least one given user,
- the number of lines is less that the number of outlets, and the terminal comprises multiplexer means, which are suitable for selecting the module that is allocated to a given user in the event of an incoming call on a line destined for that user, or vice versa for selecting an available line in the event of a call coming from said user,
- the out-station includes a user identification number, as well as means for transmitting a connection request including said user identification number, and
- the terminal includes means for verifying the conformity of said user identification number, and for sending back to the out-station, via said individual module that has been selected by the multiplexer means of the terminal, an authorisation for connecting the user to the telephone network.

2. The system of claim 1, in which the terminal further comprises relay transceiver means (120) co-operating with the transceiver means of the modules so as to receive the radio signals transmitted by said modules and retransmit them, after amplification, to the out-stations.

3. The system of claim 1, in which the interface means of the terminal include means for interfacing with one or more telephone networks of the PSTN, VSAT, ADSL, radio station, local wire loop, or radiotelephone network type.

4. The system of claim 1, in which the terminal further comprises electrical power supply means (122), and the outlets include terminals for electrically powering individual modules and/or recharging individual power supplies belonging to the individual modules.

5. The system of claim 1, in which each out-station is allocated statically and into one-to-one correspondence with a single given module.

6. The system of claim 1, in which the number of out-stations is greater than the number of modules, with each out-station being allocated to a given module in dynamic and variable manner.

7. The system of claim 6, in which the modules include means for:
- receiving a connection request issued by an out-station;
- sending to the terminal control means a request for access authorization and line allocation;
- receiving from the terminal a signal authorizing access and connection to a network line, together with a radio channel identifier; and
- setting up a call with said out-station over the channel as identified in this way.

8. The system of claim 1, in which the modules comprise:
- means (216, 218) for coupling to audio, video, and/or digital data signal sources; and
- means (210, 220) forming a local server, suitable for controlling in independent manner the exchange of signals between said sources and said transceiver means destined for and/or coming from the out-station associated with the module.

9. The system of claim 1, in which:
- the independent out-station (300) comprises an earpiece (310), a microphone (312), and a keypad (314) that are physically independent and that are provided with associated wireless transceiver means;
- the earpiece is implemented in the form of a headset to which there may be plugged (i) a second earpiece having no transceiver means, and/or (ii) said microphone (312); and
- the keypad is integrated in a distinct object, to which the said microphone (312) may also be plugged.

10. The system of claim 9, in which the microphone (312) is a transducer lacking its own transceiver means and co-operating with the transceiver means of the element to which it is connected, i.e. the earpiece (310) or the keypad (314), as the case may be.

## Patentansprüche

1. Polyvalentes drahtloses Kommunikationssystem, um Nutzer mit einem Telefonnetz zu verbinden, wobei dieses System enthält:
- einen Zugriffspunkt (100), welcher mit einer Vielzahl von Telekommunikationsleitungen (102) des Netzes verbunden ist und welcher folgendes aufweist:
· Sclinittstellenvorrichtungen (106, 108, 110) zu der Vielzahl von Leitungen, und
· Verteilervorrichtungen (114, 116), welche geeignet sind, um eine selektive Kopplung an die Vielzahl von Leitungen zu ermöglichen,
- mindestens ein Verbindungsmodul (200), welches Folgendes aufweist:
· Schnittstellenvorrichtungen (202) mit den Verteilervorrichtungen des Zugriffspunkts,
· drahtlose Sender-/Empfängervorrichtungen (204, 206), und
· Steuervorrichtungen (208, 210) der Schnittstellenvorrichtungen und der Sender-/Empfaingervorrichtungen, dazu geeignet, um Signale, die von einer ausgewählten Leitung über die Verteilervorrichtungen des Zugriffspunkt kommen, in Funksignale zum Senden zu konvertieren und empfangene Funksignale in Signale zu konvertieren, welche zu den Verteilervorrichtungen des Zugriffspunkts mit dem Ziel derselben Leitung übergeben werden,
- für jedes Verbindungsmodul mindestens eine assoziierte autonome Mobileinheit (300), welche Folgendes aufweist:
· drahtlose Sender-/Empfängervorrichtungen (302, 304), welche geeignet sind, einen bidirektionalen Übertragungsweg mit einem individuellen assoziierten Verbindungsmodul herzustellen, und
· Schnittstellenvorrichtungen (306, 308) mit Aufnahme-und/oder Wiedergabewandlern (310, 312, 314) von Audio-und Videosignalen und/oder numerischen Daten,
ein System, **dadurch gekennzeichnet, dass**:
- der Zugriffspunkt ein Mehrfachsteckdosen-Zugriffspunkt ist, welcher eine Vielzahl an einzelnen Steckdosen (104) aufweist,
- die Module einzelne Module sind, welche geeignet sind, trennbar auf eine der Steckdosen montiert zu werden, und jedem einzelnen Modul mindestens ein gegebener Benutzer zugeordnet wird,
- die Anzahl von Leitungen geringer als die Anzahl von Steckdosen ist und der Zugriffspunkt Mehrkanalvorrichtungen aufweist, welche geeignet sind, um das einem gegebenen Benutzer zugeordnete Modul, im Falle eines eingehenden Anrufs für diesen Benutzer auf einer Leitung, auszuwählen oder umgekehrt eine freie Leitung im Falle eines Anrufs von diesem Benutzer auszuwählen,
- die mobile Einheit eine Identifikationsnummer des Benutzers sowie Vorrichtungen umfasst, um eine Verbindungsanfrage zu senden, welche die Identifikationsnummer des Benutzers mit einschließt, und
- der Zugriffspunkt Vorrichtungen umfasst, um die Übereinstimmung der Identifikationsnummer des Benutzers zu überprüfen und um eine Erlaubnis, den Benutzer mit dem Telefonnetz zu verbinden, über das einzelne, durch die Mehrkanalvorrichtungen des Zugriffspunkts ausgewählte, Modul an die mobile Einheit zu senden.

2. System nach Anspruch 1, in welchem der Zugriffspunkt außerdem Sender-/Empfänger-Relaisvornchtungen (120) aufweist, welche mit den Sende-7Empfangsmodulvorrichtungen auf eine Weise zusammenwirken, um die Funksignale, welche von diesen Modulen gesendet werden, zu empfangen und sie nach Verstärkung wieder zu den mobilen Einheiten zu senden.

3. System nach Anspruch 1, in welchem die Schnittstellenvorrichtungen des Zugriffspunkts Schnittstellenvorrichtungen zu einem oder mehreren Netzwerken vom Typ RTC, VSAT, ADSL, Herzscher Strahler, drahtgebundenes lokales Netzwerk oder Funktelefonnetzwerk aufweisen.

4. System nach Anspruch 1, in welchem der Zugriffspunkt außerdem Stromversorgungsvorrichtungen (122) aufweist, wobei die Steckdosen Zugriffspunkte zur Stromversorgung der einzelnen Module und/oder zum Wiederaufladen einer einzelnen Energiequelle, welche jeweils zu den einzelnen Modulen gehört, aufweisen.

5. System nach Anspruch 1, in welchem jede mobile Einheit statisch und eindeutig einem gegebenen Modul zugeordnet ist.

6. System nach Anspruch 1, in welchem jede mobile Einheit dynamisch und variabel einem gegebenen Modul zugeordnet ist, wobei die Anzahl der mobilen Einheiten größer als jene der Module ist.

7. System nach Anspruch 6, in welchem die Module Vorrichtungen aufweisen, um:
- eine Verbindungsanfrage, welche von einer mobilen Einheit gesendet wurde, zu empfangen,
- eine Zugangserlaubnis- und Leitungszuteilungsanfrage an die Steuervorrichtung des Zugriffspunkts zu senden,
- ein Freigabe- und Zugangssignal zu einer Netzwerkleitung sowie eine Benutzeridentifizierung für den Funkkanal von dem Zugriffspunkt zu empfangen, und
- eine Kommunikation mit der mobilen Einheit auf dem so identifizierten Kanal herzustellen.

8. System nach Anspruch 1, in welchem alle Module Folgendes aufweisen:
- Ankopplungsvorrichtungen (216, 218) an Audiosignalquellen, Videosignalquellen und/oder Quellen numerischer Daten, und
- Vorrichtungen (210, 220), welche einen lokalen Server bilden, dazu geeignet, um autonom den Signalaustausch zwischen den Quellen und den Sende-/Empfangsvorrichtungen zu und/oder von der dem Modul assoziierten mobilen Einheit zu steuern.

9. System nach Anspruch 1, in welchem:
- die unabhängige mobile Einheit (300) einen Hörer (310), ein Mikrofon (312) und eine Tastatur (314) aufweist, welche räumlich unabhängig sind und mit zugeordneten drahtlosen Sende-/Empfangsvorrichtungen ausgestattet sind,
- der Hörer als Ohrhörer realisiert ist, auf welchem (i) ein zweiter Hörer, welcher mit den Sende-/Empfangseinrichtungen ausgestattet ist, und/oder (ii) das Mikrofon (312) eingesteckt werden können,
- die Tastatur in einen individuellen Gegenstand integriert ist, auf welchem auch das Mikrofon (312) eingesteckt werden kann.

10. System nach Anspruch 9, in welchem das Mikrofon (312) ein Wandler ist, welcher mit eigenen Sende-/EmpFangsvonrichtungen ausgestattet ist und welcher mit den Sende-/Empfangsvorrichtungen des Elements, des Hörers (310) oder der Tastatur (314) je nachdem zu welchem er verbunden ist, zusammenwirkt.
